# EUROPEAN PATENT APPLICATION

(11) **EP 3 157 110 A1**
(43) Date of publication of application: **19.04.2017**
(21) Application number: 16193788.3
(22) Date of filing: 13.10.2016
(51) Int. Cl.: H02G 15/007, H02G 15/013, F21V 23/00

(54) **HOUSING FOR AN ELECTRICAL CONNECTION**

(30) Priority: 16.10.2015 GB 201518293
(71) Applicant: Luxonic Lighting PLC, Basingstoke, Hampshire RG24 9JP (GB)
(72) Inventor: TAVARE, Nick, Basingstoke, Hampshire RG24 9JP (GB); SMITH, Lewis, Leeds, LS8 1AG (GB)
(74) Representative: Warren, Caroline Elisabeth

(57) **Abstract**

A housing for an electrical connection and a method for assembling the housing are described. In particular, embodiments are directed to providing a watertight or water-resistant housing for an electrical connection, which also incorporates a cable restraining means to inhibit movement of a cable entering the housing. The apparatus comprises a cable restraining means, housing and a sealing member. The sealing member bears upon the cable restraining means and the housing. The housing has a lip on its inner wall so that the cable restraining means is retained within the housing.

## Description

The invention relates to a housing for an electrical connection and to a method for assembling the housing. In particular, embodiments are directed to providing a watertight or water-resistant housing for an electrical connection, which also incorporates a cable restraining means to inhibit movement of a cable entering the housing.

In many locations where electrical connections are used, the ingress of moisture and water into the connection can be a hazard. For example, chiller units, refrigerators and freezers, including large display units, can require electrical connections to provide lighting so that users can see the items contained therein. However, the high moisture levels can cause potentially dangerous electrical faults within installed light fittings.

Lighting units for use in high-moisture environments are typically assembled as a complete unit and are subsequently installed at the site or within the cabinet to be lit. When connecting a light to a power supply cable there is commonly a section of cable that requires its outer plastic cladding to be stripped. This makes the connections especially vulnerable to moisture at this point. The connection in the wiring is often made within a housing and the housing is then closed to provide protection for the connection. However, in order to enable the cable to enter the housing, a hole is formed into the housing which can risk the ingress of moisture.

Electrical applications for equipment installed outdoors can also suffer from the ingress of moisture and housings can be provided around electrical connections. However, again, apertures formed within the housing to enable the cable to pass into and out of the connection can result in unwanted moisture around unprotected electrical cables.

Compression glands and sealing glands may be used to seal gaps where the cable enters the housing. These however can be difficult to install and have numerous parts. For example a compression gland includes at least a cap, pin, follower, sealant, seat and body parts. Installed glands may also protrude from the housing and this can limit the positioning of the electrical connection, for example limiting the way in which a light can be installed in the limited space within a refrigeration unit.

According to one aspect, there is provided an apparatus for securing a cable, the apparatus comprising:
a cable restraining means having an aperture for receiving the cable and comprising means for restricting axial movement of the cable;
a sealing member having an aperture for receiving the cable;
a housing having an aperture for receiving the cable, wherein the housing further comprises a cavity for receiving the sealing member and cable restraining means, wherein the housing and the cable restraining means further comprise securing means for retaining the cable restraining means within the housing with the sealing member arranged therebetween such that the sealing member bears upon the cable restraining means and the housing;
wherein the securing means comprises a lip circumscribing the inner wall of the housing, wherein the lip is arranged to enable the cable restraining means to pass the lip and enter the cavity of the housing and wherein the lip is further arranged to retain the cable restraining means in the housing.

The claimed apparatus provides an effective mechanism for providing a seal between a cable and a housing while enabling the cable to pass into the housing. The seal is formed without significant relative rotation of the securing means and the cable restraining means, hence reducing the application of torsion forces to the cable, causing shearing forces which can be particularly damaging to cables. Furthermore, the apparatus retains the cable in a fixed position relative to the housing; this can prevent the cable being pulled out of the housing and away from an electrical connection that may be formed within the housing. The apparatus further provides ease of installation while reducing the number and complexity of components required to implement the seal. Securing a housing around a cable that is resistant to moisture and water ingress can enable electrical connections from the cable to made within the housing even in environments where there are high moisture levels. The apparatus may also be useful for example to seal a further aperture, such as in providing a housing around a point at which a cable enters a building.

In one embodiment, the securing means comprises a non-continuous lip partially circumscribing an inner wall of the housing and a plurality of indentations provided between a plurality of flanges on the outer edge of the cable restraining means.

Optionally, the non-continuous lip comprises a plurality of clips and the outer edge of the cable restraining means comprises a number of indentations corresponding to the number of clips of the non-continuous lip of the housing. Preferably, the cable restraining means can therefore clip behind the lip provided within the housing.

In a particular embodiment, each clip has a chamfered face and the corresponding indentations on outer edge of the cable restraining means have corresponding chamfered faces. Hence the chamfered faces may meet and ease the passage of the cable restraining means past the lip of the housing when the cable restraining means is installed into the housing.

Preferably, the chamfered faces of the clips and the chamfered faces of the indentations enable the cable restraining means to pass past the non-continuous lip and into the housing, securing the sealing member between the cable restraining means and the housing.

In a particular embodiment, the rear faces of the clips and the indentations are not chamfered to retain the cable restraining means behind the non-continuous lip in the housing. Hence, the cable restraining means can be clipped into the housing more easily than it can be removed from the housing.

Alternatively, or in addition, the non-continuous lip and the indentations provided between the flanges are arranged such that, with the cable restraining means in a first rotational position relative to the housing, the flanges on the cable restraining means are arranged to pass through the non-continuous lip of the housing; and further wherein, with the cable restraining means in a second rotational position relative to the housing, the flanges on the cable restraining means lock behind the non-continuous lip of the housing to retain the cable restraining means within the housing and secure the sealing member between the cable restraining means and the housing.

Preferably, the angle between the first rotational position and the second rotational position is more than 20°, preferably more than 30°, preferably more than 40°, but less than 180°. Hence the cable restraining means can be installed without significant relative rotation of the cable restraining means and housing and without applying damaging torsional forces to the cable.

Preferably, the number of lips of the housing matches the number of flanges of the cable restraining means. Typically, two, four or six lips and flanges may be provided, but odd numbers of lips and flanges may also be provided.

Alternatively, or in addition, the securing means may comprise at least one of:
at least one recess provided in the housing or on the cable restraining means and corresponding one or more sprung protrusions on the cable restraining means or on the housing;
at least one lip extending from the inner wall of the housing, wherein the lip or the outer edge of the cable restraining means is arranged to flex in order to pass over the lip, but to resist deformation in the other direction to prevent removal of the cable restraining means from the housing;
fixing means, preferably a screw or bolt, for mechanically join the housing to the cable restraining means.

In one embodiment, the cable restraining means comprises a plurality of barbs for restraining the cable within the aperture.

In a particular embodiment, the sealing member comprises an o-ring.

In one embodiment, wherein the cable restraining means comprises two portions, a first portion comprising means for gripping the cable and a second portion comprising the one or more flanges.

According to a further aspect, there is provided a method for securing a cable, the method comprising:
inserting the cable through an aperture in a housing, the housing having a cavity and a non-continuous lip around its inner surface;
inserting the cable through an aperture in a sealing member;
inserting the cable through an aperture in a cable restraining means, the cable restraining means retaining the cable in a fixed longitudinal position relative to the cable restraining means;
inserting the sealing member and the cable restraining means into a cavity within the housing, such that the edge of the cable restraining means meets the non-continuous lip provided around the inner surface of the housing; and
moving the edge of the cable restraining means past the non-continuous lip of the housing to retain the edge of the cable restraining means behind the non-continuous lip and to compress the sealing member between the cable restraining means and the housing and to form a seal around the cable and between the cable restraining means and the housing.

The method enables a cable to be secured within a housing while significantly reducing the number and complexity of steps within the manufacturing process.

There is also described herein an apparatus for securing a cable, the apparatus comprising:
a cable restraining means having an aperture for receiving the cable and comprising means for restricting axial movement of the cable;
a sealing member having an aperture for receiving the cable;
a housing having an aperture for receiving the cable, wherein the housing further comprises a cavity for receiving the sealing member and cable restraining means, wherein the housing and the cable restraining means further comprise securing means for retaining the cable restraining means within the housing with the sealing member arranged therebetween such that the sealing member bears upon the cable restraining means and the housing;
wherein the securing means comprises means for retaining the cable restraining means within the housing without relative rotation of the cable restraining means or the housing through an angle greater than 180°.

Embodiments of the invention are described in more detail below with reference to the figures in which:
Figure 1 illustrates a compression gland;
Figure 2 is a schematic diagram of a housing according to one embodiment;
Figure 3 illustrates a cross section of the components when installed according to one embodiment;
Figure 4 shows an exterior view of the fitting according to one embodiment.

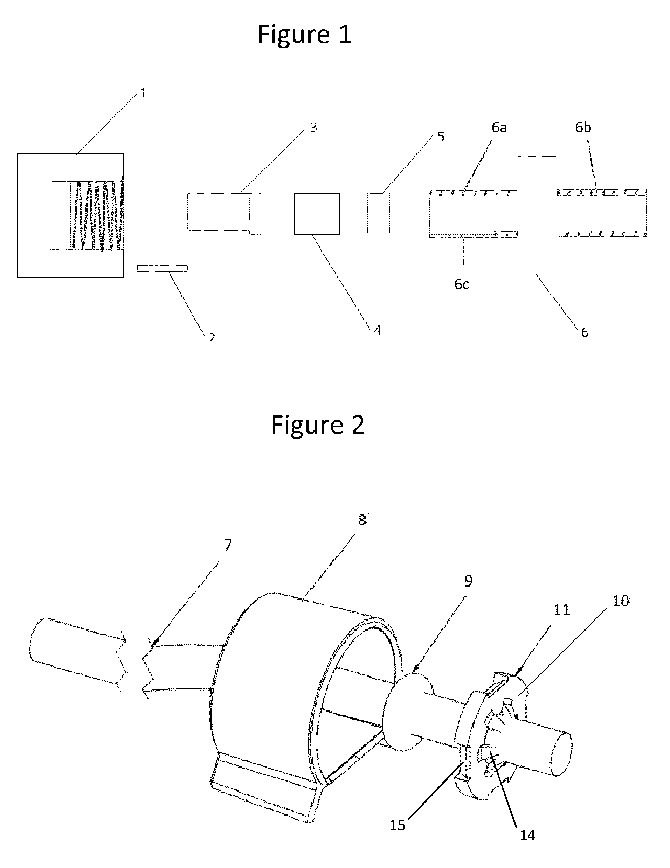

Referring to Figure 1 the structure and assembly of a known compression gland system is described. The gland is formed from a cap 1, pin 2, follower 3, sealant 4, seat 5 and body 6. The body is formed of two threaded elements, 6a, 6b joined by a central portion having a larger diameter. At least one of the threaded elements 6a, 6b contains a cavity with a large enough diameter to enable the follower 3, sealant 4 and seat 5 to fit inside. At least one of the elements 6a or 6b also has a groove 6c configured to receive the pin. The cable passes through an aperture in each of the components of the compression gland system with the exception of the pin. The apertures are not shown in the figure for clarity, rather the order in which the elements combine is illustrated.

After inserting the cable through all of the apertures the seat 5, sealant 4 and follower 3 are inserted into the cavity within the body 6. The pin 2 is placed in a groove 6c created between the follower 3 and the body and prevents rotation of the follower 3 (and hence the sealant 4 and the seat 5) within the body 6. Fitting of the pin 2 within the groove 6c of the body to prevent rotation of the components within the body 6 also prevents rotation of the cable that passes through those components and reduces shearing forces on the cable, which can lead to wear and breaks in the cable. With the cable in position, the cap 1 is then screwed onto the body 6 using a torque. This compresses the assembly, forcing the follower 3 and seat 5 to compress the sealant 4. The sealant 4 can be formed of a soft solid such as neoprene or Teflon. When compressed, the sealant 4 forms a seal between the compression gland and the cable.

When the compression gland is assembled the secondary part of the body 6b, with a thread (it may or may not have a second cavity containing a further follower 3, seat 5 and sealant 4) can be screwed into a fitting. This fitting will be placed in a drilled hole in a wall or surface and allows the compression gland to bring an electric cable through said surface whilst still providing a watertight seal. However this means that a large part of the compression gland protrudes from the surface.

As can be seen from both the description and this figure, the compression gland requires a large number of elements and its installation is a complex step within any manufacturing process. It is also clear that using this device would necessitate drilling a hole in the housing and its installation would lead to the compression gland protruding from the housing. This could hamper the installation of and electrical component such as a light in the desired location.

Figure 2 illustrates one embodiment of the claimed apparatus by way of example. Referring to Figure 2, the apparatus comprises a housing 8, a sealing member 9, and a cable restraining means 10. A cable 7 is fed through the housing 8, the sealing member 9 and the cable restraining means 10, providing the configuration of components shown in Figure 2. As will be appreciated by the skilled person, depending on the manufacturing process, the elements may be passed over the cable in the reverse order.

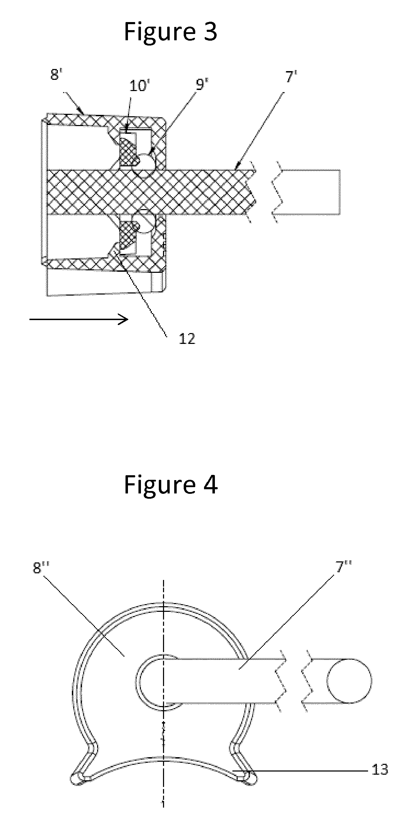

The housing contains within it a lip 12 (shown in figure 3) partially circumscribing the inner surface of the housing 8. The sealing member 9 and the cable restraining means 10 each have an aperture for receiving the cable. The aperture of the cable restraining means includes a plurality of barbs 14 for gripping and securing the cable. The cable restraining means further comprises flanges 11 on its outer edge, which are separated by a plurality of indentations 15. The indentations 15 have an edge that is chamfered or angled towards the housing such that the indentations 15 present a sloped face towards the housing 8. The indentations 15 are preferably chamfered at an angle of 30-60°.

A method for assembling the apparatus shown includes feeding a cable through a housing 8, sealing member 9 and cable restraining means 10. Then, with the face of the cable restraining means 10 square-on to the aperture of the cavity of the housing 8, the cable restraining means 10 is inserted into the housing so that it meets the lip 12 on the housing inner wall.

As illustrated in Fig. 3, the lip 12 on the inner wall of the housing also has a chamfered edge, preferably chamfered at an angle of 60-30° to match the chamfer of the indentations 15 in the cable restraining means 10. The lip 12 is non-continuous around the inner wall so that the lip forms a plurality of chamfered clips that match with the indentations on the cable restraining means. In particular, for the cable restraining means 10 illustrated in Fig. 2, four clips would be provided within the housing to match the four indentations in the cable restraining means. However, it will be clear that any number of clips may be provided, for example 2, 4, 6, or 8 clips.

As the cable restraining means 10 is pushed into the housing 8 in the direction shown by the arrow in Figure 3, and against the back wall of the housing 8, it is retained behind the housing lip 12. The sealing member 9 is compressed between the cable restraining means and the housing and forms a seal around the cable 7 and between the cable restraining means and the housing.

As noted above, the indentations between the flanges of the cable restraining means and the lip within the housing are chamfered on the leading face, but present a flat surface on their rear faces such that, once the cable restraining means is clipped into place, the indentations can no longer pass back over the lip and out of the housing. Therefore, the cable restraining means 10 is held firmly in place within the housing 8.

Hence, the cable restraining means can pass over the lip in the housing in one direction but is retained in the opposite direction thereby securing the sealing member between the cable restraining means and the housing. This means the cable restraining means can be snap-fitted into the housing.

When in place the sealing member 9 keeps the fitting stable and forms a moisture-resistant seal between the cable restraining means 10 and the housing 8.

Within the housing, the moisture resistant seal formed between the cable restraining means and the housing enables the cable 7 to be stripped of its outer cladding and electrical connections to be made safely and without interference or degradation due to water or moisture.

Once the seal has been made where the cable enters the housing, and the necessary electrical connections have been formed, the end of the housing 8 is fixed to the lighting unit to which is it being fitted, for example by an ultrasonic welding technique. In a particular embodiment, the housing 8 may be ultrasonically welded to a mating luminaire.

Figure 3 shows a cross section of the light fitting when installed. The sealing member 9' and cable restraining means 10' are fitted within the housing 8' so they are stationary within the housing 8'. The sealing member 9' bears upon the cable retaining means 10' forming a moisture-resistant seal between the sealing member 9' and each of the cable retaining means 10' and the housing 8'.

It will be appreciated that, while it has been described herein as a single element, the cable restraining means 10 may comprise two separate parts; one part of the cable restraining means 10 being directed to gripping the cable and the other to forming flanges 11. The two elements may be coupled before being passed over the cable and inserted within the housing or the cable grip may simply be trapped behind the flanges when the flanges are inserted past the lip of the housing.

As noted above, barbs 14 may be used to constrain the cable axially relative to the cable retaining means 10, with the barbs gripping the outer plastic coating of the cable. Alternatively, bristles or flexible elasticated material may be used to enable the cable restraining means to retain the cable securely and inhibit longitudinal movement of the cable.

As noted above, the housing may be an end cap suitable for use in a light fitting, or it may be a weatherproof enclosure for use in protecting an electrical connection used in the outdoors or any other type of housing that may be used to protect an electrical connection from moisture. The arrangement described herein can be applied to any housing in which an inner lip can be provided on the inside of the housing, preferably by an integral moulding method when the housing is formed.

Elements of the fitting are preferably formed from any suitable plastics materials and can be manufactured using injection moulding techniques.

In other embodiments, other mechanisms may be used to join the housing 8' and the cable restraining means 10' together. For example, a recess in the housing 8' may be arranged to mate with a sprung protrusion extending from the cable restraining means 10' when it reaches the recess. Another possible configuration would include a flexible outer edge of the cable restraining means 10' that can be bent in one direction with ease (in order to push it past the lip), but that cannot be bent the other way. Another method may involve the use of screws or the like to physically join the cable restraining means and a lip provided within the housing together. Other mechanical locking mechanisms could be used that do not require a prolonged rotation to install.

In a further embodiment, flanges are provided on the cable restraining means that match in number and positioning, gaps in a non-continuous lip provided on the inner wall of the housing. The cable restraining means is inserted into the housing in a first orientation, so that the flanges pass through the gaps in the non-continuous lip. The cable restraining means is then rotated about an axis perpendicular to its face such that, in a second position, the flanges on the outer edge of the cable restraining means are retained behind the lip on the housing inner wall. The sealing means is then compressed and retained between the cable restraining means and the housing as set out above.

In such an embodiment, the cable restraining means is moved from the first to the second position by rotating it through an angle. The angle required depends upon the number of flanges and symmetry of said flanges. For example if two flanges 180 degrees apart were used then an angle of 90 degrees would ensure the flanges and lip were locked tightly. However, the cable restraining means is preferably provided with more than two flanges, preferably four or six flanges, and corresponding lips are provided within the housing.

Figure 4 illustrates one embodiment of a cable sealed and restrained within a housing. Referring to Fig. 4, the exterior of the housing and the protruding cable are shown. The cable is shown protruding from the housing where the aperture is sealed with a watertight seal. The cross-section and overall shape of the housing will vary depending on the shape and configuration of the light fitting to which it is to be connected.

In summary, a housing for an electrical connection and a method for assembling the housing are described. In particular, embodiments are directed to providing a watertight or water-resistant housing for an electrical connection, which also incorporates a cable restraining means to inhibit movement of a cable entering the housing. The apparatus comprises a cable restraining means, housing and a sealing member. The sealing member bears upon the cable restraining means and the housing. The housing has a lip on its inner wall so that the cable restraining means is retained within the housing.

Exemplary embodiments of the apparatus and method are set out below in the following numbered clauses:
1. An apparatus for securing a cable, the apparatus comprising:
   a cable restraining means having an aperture for receiving the cable and comprising means for restricting axial movement of the cable;
   a sealing member having an aperture for receiving the cable;
   a housing having an aperture for receiving the cable, wherein the housing further comprises a cavity for receiving the sealing member and cable restraining means, wherein the housing and the cable restraining means further comprise securing means for retaining the cable restraining means within the housing with the sealing member arranged therebetween such that the sealing member bears upon the cable restraining means and the housing;
   wherein the securing means comprises a lip circumscribing the inner wall of the housing, wherein the lip is arranged to enable the cable restraining means to pass the lip and enter the cavity of the housing and wherein the lip is further arranged to retain the cable restraining means in the housing.
2. The apparatus according to clause 1 wherein the lip comprises a non-continuous lip partially circumscribing an inner wall of the housing and wherein the cable restraining means comprises a plurality of indentations provided between a plurality of flanges on the outer edge of the cable restraining means.
3. The apparatus according to clause 2 wherein the non-continuous lip comprises a plurality of clips and wherein the outer edge of the cable restraining means comprises a number of indentations corresponding to the number of clips of the non-continuous lip of the housing.
4. The apparatus according to clause 3 wherein each clip has a chamfered face and wherein the corresponding indentations on the outer edge of the cable restraining means have corresponding chamfered faces.
5. The apparatus according to clause 4 wherein the chamfered faces of the clips and the chamfered faces of the indentations enable the cable restraining means to pass past the non-continuous lip and into the housing, securing the sealing member between the cable restraining means and the housing.
6. The apparatus according to clause 5 wherein the rear faces of the clips and the indentations are not chamfered to retain the cable restraining means behind the non-continuous lip in the housing.
7. The apparatus according to clause 2 wherein the non-continuous lip and the indentations provided between the flanges are arranged such that, with the cable restraining means in a first rotational position relative to the housing, the flanges on the cable restraining means are arranged to pass through the non-continuous lip of the housing; and
   further wherein, with the cable restraining means in a second rotational position relative to the housing, the flanges on the cable restraining means lock behind the non-continuous lip of the housing to retain the cable restraining means within the housing and secure the sealing member between the cable restraining means and the housing.
8. The apparatus according to clause 7 wherein the angle between the first rotational position and the second rotational position is more than 20°, preferably more than 30°, preferably more than 40°, but less than 180°.
9. The apparatus of any of clauses 2 to 8 wherein the non-continuous lip is divided into at least two, preferably at least four, optionally at least six lips.
10. The apparatus of any of clauses 2 to 9 wherein the cable restraining means comprises at least two, preferably at least four, optionally at least six flanges.
11. The apparatus of any of clauses 2 to 10 wherein the number of lips of the housing matches the number of flanges of the cable restraining means.
12. The apparatus according to clause 1 wherein the securing means comprises at least one of:
   at least one recess provided in the housing or on the cable restraining means and corresponding one or more sprung protrusions on the cable restraining means or on the housing;
   the lip extending from the inner wall of the housing, wherein the lip or the outer edge of the cable restraining means is arranged to flex in order to pass over the lip, but to resist deformation in the other direction to prevent removal of the cable restraining means from the housing;
   fixing means, preferably a screw or bolt, for mechanically join the housing to the cable restraining means
   the retractable lip provided on the inner wall of the housing, wherein the lip is retractable for enabling the cable restraining means to pass into the housing and extensible for retaining the cable restraining means in the housing.
13. The apparatus of any preceding clause, wherein the cable restraining means comprises a plurality of barbs for restraining the cable within the aperture.
14. The apparatus of any preceding clause wherein the sealing member comprises an o-ring.
15. The apparatus of any preceding clause, wherein the housing is formed by injection moulding.
16. The apparatus of any preceding clause, wherein the housing comprises an end cap for a light fitting or a weatherproof enclosure for use outdoors.
17. The apparatus of any preceding clause, wherein the housing further comprises a surface for connecting the housing to a lighting element, preferably a surface for enabling ultrasonic welding of the housing to a lighting element.
18. The apparatus of any preceding clause, wherein the apparatus consists of the housing, sealing member and cable restraining means.
19. The apparatus of any of clauses 2 to 18, wherein the cable restraining means comprises two portions, a first portion comprising means for gripping the cable and a second portion comprising the one or more flanges.
20. A method for protecting a portion of a power supply cable, the method comprising:
   inserting the cable through an aperture in a housing, the housing having a cavity and a non-continuous lip around its inner surface;
   inserting the cable through an aperture in a sealing member;
   inserting the cable through an aperture in a cable restraining means, the cable restraining means retaining the cable in a fixed longitudinal position relative to the cable restraining means;
   inserting the sealing member and the cable restraining means into a cavity within the housing, such that the edge of the cable restraining means meets the non-continuous lip provided around the inner surface of the housing;
   moving the edge of the cable restraining means past the non-continuous lip of the housing to retain the edge of the cable restraining means behind the non-continuous lip and to compress the sealing member between the cable restraining means and the housing and to form a seal around the cable and between the cable restraining means and the housing.
21. The method according to clause 20 wherein moving the edge of the cable restraining means past the non-continuous lip comprises pushing the edge of the cable restraining means past the non-continuous lip of the housing.
22. The method according to clause 20 wherein moving the edge of the cable restraining means past the non-continuous lip comprises moving the cable restraining means past the non-continuous lip in a first rotational position, and rotating the cable restraining means to a second position to retain the cable restraining means behind the non-continuous lip within the housing.
23. The method of any of clauses 20 to 22, further comprising forming an electrical connection for the cable within the housing.
24. The method of any of clauses 20 to 23, further comprising ultrasonically welding the housing to an adjacent component to seal the housing.

## Claims

1. An apparatus for securing a cable, the apparatus comprising:
a cable restraining means having an aperture for receiving the cable and comprising means for restricting axial movement of the cable;
a sealing member having an aperture for receiving the cable;
a housing having an aperture for receiving the cable, wherein the housing further comprises a cavity for receiving the sealing member and cable restraining means, wherein the housing and the cable restraining means further comprise securing means for retaining the cable restraining means within the housing with the sealing member arranged therebetween such that the sealing member bears upon the cable restraining means and the housing;
wherein the securing means comprises a lip circumscribing the inner wall of the housing, wherein the lip is arranged to enable the cable restraining means to pass the lip and enter the cavity of the housing and wherein the lip is further arranged to retain the cable restraining means in the housing.

2. The apparatus according to claim 1 wherein the lip comprises a non-continuous lip partially circumscribing an inner wall of the housing and wherein the cable restraining means comprises a plurality of indentations provided between a plurality of flanges on the outer edge of the cable restraining means.

3. The apparatus according to claim 2 wherein the non-continuous lip comprises a plurality of clips and wherein the outer edge of the cable restraining means comprises a number of indentations corresponding to the number of clips of the non-continuous lip of the housing, optionally wherein each clip has a chamfered face and wherein the corresponding indentations on the outer edge of the cable restraining means have corresponding chamfered faces, further optionally wherein the chamfered faces of the clips and the chamfered faces of the indentations enable the cable restraining means to pass past the non-continuous lip and into the housing, securing the sealing member between the cable restraining means and the housing, further optionally wherein the rear faces of the clips and the indentations are not chamfered to retain the cable restraining means behind the non-continuous lip in the housing.

4. The apparatus according to claim 2 wherein the non-continuous lip and the indentations provided between the flanges are arranged such that, with the cable restraining means in a first rotational position relative to the housing, the flanges on the cable restraining means are arranged to pass through the non-continuous lip of the housing; and
further wherein, with the cable restraining means in a second rotational position relative to the housing, the flanges on the cable restraining means lock behind the non-continuous lip of the housing to retain the cable restraining means within the housing and secure the sealing member between the cable restraining means and the housing, optionally wherein the angle between the first rotational position and the second rotational position is more than 20°, preferably more than 30°, preferably more than 40°, but less than 180°.

5. The apparatus of any of claims 2 to 4 wherein the non-continuous lip is divided into at least two, preferably at least four, optionally at least six lips and wherein the cable restraining means comprises at least two, preferably at least four, optionally at least six flanges.

6. The apparatus according to claim 1 wherein the securing means comprises at least one of:
at least one recess provided in the housing or on the cable restraining means and corresponding one or more sprung protrusions on the cable restraining means or on the housing;
the lip extending from the inner wall of the housing, wherein the lip or the outer edge of the cable restraining means is arranged to flex in order to pass over the lip, but to resist deformation in the other direction to prevent removal of the cable restraining means from the housing;
fixing means, preferably a screw or bolt, for mechanically join the housing to the cable restraining means
the retractable lip provided on the inner wall of the housing, wherein the lip is retractable for enabling the cable restraining means to pass into the housing and extensible for retaining the cable restraining means in the housing.

7. The apparatus of any preceding claim, wherein the cable restraining means comprises a plurality of barbs for restraining the cable within the aperture.

8. The apparatus of any preceding claim wherein the sealing member comprises an o-ring.

9. The apparatus of any preceding claim, wherein the housing is formed by injection moulding.

10. The apparatus of any preceding claim, wherein the housing comprises an end cap for a light fitting or a weatherproof enclosure for use outdoors.

11. The apparatus of any of claims 2 to 10, wherein the cable restraining means comprises two portions, a first portion comprising means for gripping the cable and a second portion comprising the one or more flanges.

12. A method for protecting a portion of a power supply cable, the method comprising:
inserting the cable through an aperture in a housing, the housing having a cavity and a non-continuous lip around its inner surface;
inserting the cable through an aperture in a sealing member;
inserting the cable through an aperture in a cable restraining means, the cable restraining means retaining the cable in a fixed longitudinal position relative to the cable restraining means;
inserting the sealing member and the cable restraining means into a cavity within the housing, such that the edge of the cable restraining means meets the non-continuous lip provided around the inner surface of the housing;
moving the edge of the cable restraining means past the non-continuous lip of the housing to retain the edge of the cable restraining means behind the non-continuous lip and to compress the sealing member between the cable restraining means and the housing and to form a seal around the cable and between the cable restraining means and the housing.

13. The method according to claim 12 wherein moving the edge of the cable restraining means past the non-continuous lip comprises pushing the edge of the cable restraining means past the non-continuous lip of the housing or wherein moving the edge of the cable restraining means past the non-continuous lip comprises moving the cable restraining means past the non-continuous lip in a first rotational position, and rotating the cable restraining means to a second position to retain the cable restraining means behind the non-continuous lip within the housing.

14. The method of claim 12 or 13, further comprising forming an electrical connection for the cable within the housing.

15. The method of any of claims 12 to 14, further comprising ultrasonically welding the housing to an adjacent component to seal the housing.
